(19) Europäisches Patentamt
European Patent Office
Office européen des brevets

(11) EP 4 047 064 A1

(12) EUROPEAN PATENT APPLICATION
published in accordance with Art. 153(4) EPC

(43) Date of publication:
**24.08.2022 Bulletin 2022/34**

(21) Application number: **20876027.2**

(22) Date of filing: **15.10.2020**

(51) International Patent Classification (IPC):
***C09J 9/00*** *(2006.01)* ***C09J 11/06*** *(2006.01)*
***C09J 11/08*** *(2006.01)* ***C09J 133/00*** *(2006.01)*
***C09J 183/04*** *(2006.01)* ***G02F 1/1333*** *(2006.01)*

(52) Cooperative Patent Classification (CPC):
**C09J 9/00; C09J 11/06; C09J 11/08; C09J 133/00; C09J 183/04; G02F 1/1333**

(86) International application number:
**PCT/JP2020/038874**

(87) International publication number:
**WO 2021/075485 (22.04.2021 Gazette 2021/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.10.2019 JP 2019188697**
**12.08.2020 JP 2020136154**

(71) Applicant: **SEKISUI CHEMICAL CO., LTD.**
**Osaka-shi**
**Osaka**
**530-8565 (JP)**

(72) Inventors:
- **UEDA, Saori**
**Mishima-gun, Osaka 618-0021 (JP)**
- **FUKUDA, Takashi**
**Mishima-gun, Osaka 618-0021 (JP)**
- **YAMADA, Yasuyuki**
**Mishima-gun, Osaka 618-0021 (JP)**
- **WAKIYA, Takeshi**
**Mishima-gun, Osaka 618-0021 (JP)**

(74) Representative: **Ter Meer Steinmeister & Partner Patentanwälte mbB**
**Nymphenburger Straße 4**
**80335 München (DE)**

# (54) GAP MATERIAL, ADHESIVE, AND DISPLAY DEVICE

(57) There is provided an adhesive capable of improving the visibility and controlling gaps with high accuracy. The adhesive according to the present invention is an adhesive containing a curable component and a gap material, in which the 10% K value of the gap material is 10000 N/mm$^2$ or less, and the absolute value of the difference between the refractive index of a cured product obtained by curing the curable component at 23°C for 1 hour and the refractive index of the gap material is 0.1 or less.

[FIG. 1.]

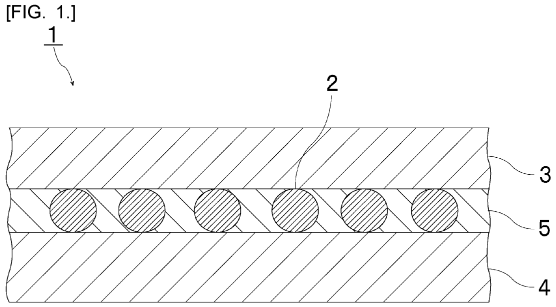


EP 4 047 064 A1

## Description

## TECHNICAL FIELD

The present invention relates to a gap material having favorable elasticity. The present invention also relates to an adhesive and a display device, which are obtained using the gap material.

## BACKGROUND ART

Various adhesives are used to bond two adherends together. A gap material (spacer) may be blended in the adhesive in order to make the thickness of the adhesive layer formed by the adhesive uniform and to control the spacing (gap) between the two adherends.

Conventional liquid crystal display devices include a liquid crystal panel in which a liquid crystal layer is enclosed between substrates, a pair of polarizing plates sandwiching the liquid crystal panel, an image display unit composed of a backlight unit, and a transparent protective material. In conventional liquid crystal display devices, since there is a gap between the image display unit and the transparent protective material, interfacial reflection may occur by the difference in refractive index between the transparent protective material and air, and the visibility of images may decrease.

To cope with this, a technique (optical bonding) is known which is for decreasing the reflection loss generated at the interface of the transparent protective material and improving the visibility by filling the gap between the image display unit and the transparent protective material with a translucent material (for example, an adhesive) having a refractive index equivalent to that of the transparent protective material. Materials used in optical bonding are disclosed, for example, in Patent Document 1 below.

Patent Document 1 below discloses a curable polyorganosiloxane composition containing one or more compounds selected from the group consisting of the following compound (A1), the following compound (B1), the following compound (B2), the following compound (A2), and the following compound (B3); and (C) a platinum catalyst. The compound (A1) is an alkenyl group-containing polyorganosiloxane represented by the following Formula (1). The compound (B1) is a polyorganohydrogensiloxane represented by the following Formula (2). The compound (A2) is an alkenyl group-containing polyorganosiloxane represented by the following Formula (3). The compound (B3) is a polyorganohydrogensiloxane represented by the following Formula (4). The compound (B2) is a polyorganohydrogensiloxane composed of $R^{b3}{}_2R^{c2}SiO_{1/2}$ unit (in the formula, (in the formula, $R^{b3}$ is independently an alkyl group having 1 to 6 carbon atoms or an aryl group having 6 to 20 carbon atoms, and $R^{c2}$ is a hydrogen atom) and $SiO_{4/2}$ unit. The compound (B2) has three or more hydrogen atoms bonded to silicon atoms in one molecule. In the curable polyorganosiloxane composition, the content of the compound (A2) is 0 parts by weight or more and 60 parts by weight or less with respect to 100 parts by weight of the sum of the compound (A1) and the compound (A2). In the curable polyorganosiloxane composition, (HB1 + HB2 + HB3)/(ViA1 + ViA2) is 0.6 to 2.2. Here, ViAl is the molar number of the alkenyl group in the compound (A1), and ViA2 is the molar number of the alkenyl group in the compound (A2). HB1 is the molar number of hydrogen atoms bonded to silicon atoms in the compound (B1), HB2 is the molar number of hydrogen atoms bonded to silicon atoms in the compound (B2), and HB3 is the molar number of hydrogen atoms in the compound (B3).

[Chemical 1]

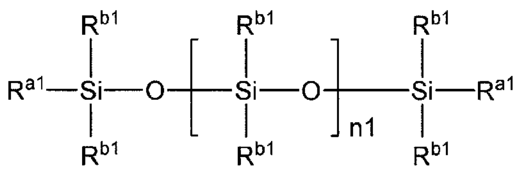

(1)

In Formula (1), $R^{a1}$ is independently an alkenyl group having 2 to 6 carbon atoms and $R^{b1}$ is independently an alkyl group having 1 to 6 carbon atoms or an aryl group having 6 to 20 carbon atoms. In Formula (1), n1 is a number to set the viscosity of the alkenyl group-containing polyorganosiloxane represented by Formula (1) at 23°C to 10 mPa·s to 1000000 mPa·s.

[Chemical 2]

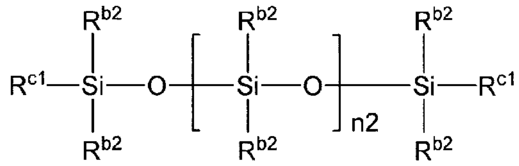

(2)

In Formula (2), $R^{c1}$ is a hydrogen atom and $R^{b2}$ is independently an alkyl group having 1 to 6 carbon atoms or an aryl group having 6 to 20 carbon atoms. In Formula (2), n2 is a number to set the viscosity of the polyorganohydrogensiloxane represented by Formula (2) at 23°C to 0.1 mPa·s to 300 mPa·s.

[Chemical 3]

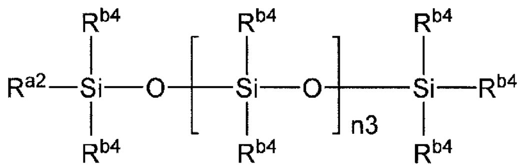

(3)

In Formula (3), $R^{a2}$ is independently an alkenyl group having 2 to 6 carbon atoms and $R^{b4}$ is independently an alkyl group having 1 to 6 carbon atoms or an aryl group having 6 to 20 carbon atoms. In Formula (3), n3 is a number to set the viscosity of the alkenyl group-containing polyorganosiloxane represented by Formula (3) at 23°C to 10 mPa·s to 1000000 mPa·s.

[Chemical 4]

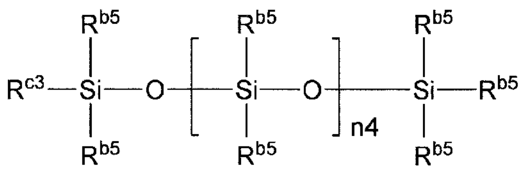

(4)

In Formula (4), $R^{c3}$ is a hydrogen atom and $R^{b5}$ is independently an alkyl group having 1 to 6 carbon atoms or an aryl group having 6 to 20 carbon atoms. In Formula (4), n4 is a number to set the viscosity of the linear polyorganohydrogensiloxane represented by Formula (4) at 23°C to 0.1 mPa·s to 300 mPa·s.

**Related Art Document**

**Patent Document**

Patent Document 1: JP 2017-226832 A

**SUMMARY OF THE INVENTION**

**PROBLEMS TO BE SOLVED BY THE INVENTION**

In recent years, optical bonding has been utilized in various fields. For example, in a display device such as an in-vehicle display, the use of optical bonding is discussed in order to improve the visibility. Specifically, it is discussed to coat an image display element with a material used for optical bonding (optical bonding material, for example, a translucent material such as an adhesive), to dispose a transparent protective material on the surface of the optical bonding material on the opposite side to the image display element side, and to cure the optical bonding material, and

the like. The cured product of the optical bonding material forms an adhesive layer that bonds the image display element and the transparent protective material together.

The viscosity of the optical bonding material may be low in the case of optical bonding materials used in display devices (for example, in-vehicle displays). In the case of optical bonding materials having a low viscosity, the optical bonding material flows on the image display element by, for example, the weight of the transparent protective material until the curing of the optical bonding material is completed, and it may not be possible to sufficiently secure the thickness (gap) of the cured product (adhesive layer) of the optical bonding material on the image display element. When a display device (for example, an in-vehicle display) is repeatedly exposed to temperature changes from low temperatures to high temperatures, stress may be generated between members (for example, an image display element and a transparent protective material) by the difference in linear expansion coefficient between the members. When the thickness (gap) of the cured product (adhesive layer) of the optical bonding material cannot be sufficiently secured, the stress generated between the members cannot be sufficiently relaxed, and cracking and peeling off of the cured product (adhesive layer) of the optical bonding material may occur. In order to relax the stress generated between members, it is required to secure a sufficient thickness (gap) of the cured product (adhesive layer) of the optical bonding material.

In the case of conventional optical bonding materials, a hard gap material such as a glass spacer may be used in order to secure a sufficient thickness (gap) of the cured product (adhesive layer) of the optical bonding material. However, when a hard gap material is used, the members (for example, an image display element and a transparent protective material) may be damaged and the visibility may decrease.

An object of the present invention is to provide a gap material capable of improving the visibility and controlling gaps with high accuracy. Another object of the present invention is to provide an adhesive and a display device, which are obtained using the gap material.

**MEANS FOR SOLVING THE PROBLEMS**

According to a broad aspect of the present invention, there is provided an adhesive containing a curable component and a gap material, in which a 10% K value of the gap material is 10000 $N/mm^2$ or less, and an absolute value of a difference between a refractive index of a cured product obtained by curing the curable component at 23°C for 1 hour and a refractive index of the gap material is 0.1 or less.

In a certain aspect of the adhesive according to the present invention, a ratio of a transmittance of a cured product obtained by curing the adhesive at 23°C for 1 hour at a wavelength of 650 nm to a transmittance of a cured product obtained by curing the curable component at 23°C for 1 hour at a wavelength of 650 nm is 0.92 or more.

According to a broad aspect of the present invention, there is provided an adhesive containing a curable component and a gap material, in which a 10% K value of the gap material is 10000 $N/mm^2$ or less, and an absolute value of a difference between a refractive index of a cured product obtained by curing the curable component at a wavelength of 350 nm and an irradiance of 1500 $mJ/cm^2$ and a refractive index of the gap material is 0.1 or less.

In a certain aspect of the adhesive according to the present invention, a ratio of a transmittance of a cured product obtained by curing the adhesive at a wavelength of 350 nm and an irradiance of 1500 $mJ/cm^2$ at a wavelength of 650 nm to a transmittance of a cured product obtained by curing the curable component at a wavelength of 350 nm and an irradiance of 1500 $mJ/cm^2$ at a wavelength of 650 nm is 0.92 or more.

In a certain aspect of the adhesive according to the present invention, the gap material contains a silicone resin.

In a certain aspect of the adhesive according to the present invention, the curable component contains an acrylic resin or a silicone resin.

In a certain aspect of the adhesive according to the present invention, the curable component contains a silicone resin represented by the following Formula (1).

[Chemical 5]

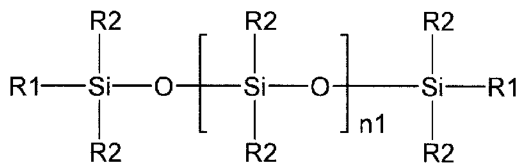

(1)

In Formula (1), R1 independently represents an alkenyl group having 2 to 6 carbon atoms and R2 independently represents an alkyl group having 1 to 6 carbon atoms or an aryl group having 6 to 20 carbon atoms. In Formula (1), n1 is a number to set the viscosity of the alkenyl group-containing polyorganosiloxane represented by Formula (1) at 23°C to 10 mPa·s to 1000000 mPa·s.

In a certain aspect of the adhesive according to the present invention, the gap material is particles.

In a certain aspect of the adhesive according to the present invention, the average particle diameter of the gap materials is 30 μm or more.

In a certain aspect of the adhesive according to the present invention, the adhesive is used in an optical bonding application.

In a certain aspect of the adhesive according to the present invention, the adhesive has a viscosity of 200 mPa·s or more and 100000 mPa·s or less at 25°C.

According to a broad aspect of the present invention, there is provided a gap material that is used to obtain an optical bonding adhesive and has a 10% K value of 10000 N/mm$^2$ or less.

In a certain aspect of the gap material according to the present invention, the gap material has a refractive index of 1.40 or more and 1.60 or less.

In a certain aspect of the gap material according to the present invention, the gap material contains a silicone resin.

In a certain aspect of the gap material according to the present invention, the gap material is particles and has an average particle diameter of 30 μm or more.

According to a broad aspect of the present invention, there is provided a display device including a first member, an image display element as a second member, and an adhesive layer bonding the first member and the second member together, in which the adhesive layer is a cured product of the adhesive described above.

In a certain aspect of the display device according to the present invention, the first member is a transparent protective material.

## EFFECT OF THE INVENTION

The adhesive according to the present invention contains a curable component and a gap material. In the adhesive according to the present invention, the 10% K value of the gap material is 10000 N/mm$^2$ or less. In the adhesive according to the present invention, the absolute value of the difference between the refractive index of the cured product obtained by curing the curable component at 23°C for 1 hour and the refractive index of the gap material is 0.1 or less. The adhesive according to the present invention has the above-mentioned configuration, and is thus capable of improving the visibility and controlling gaps with high accuracy.

The adhesive according to the present invention contains a curable component and a gap material. In the adhesive according to the present invention, the 10% K value of the gap material is 10000 N/mm$^2$ or less. In the adhesive according to the present invention, the absolute value of the difference between the refractive index of the cured product obtained by curing the curable component at a wavelength of 350 nm and an irradiance of 1500 mJ/cm$^2$ and the refractive index of the gap material is 0.1 or less. The adhesive according to the present invention has the above-mentioned configuration, and is thus capable of improving the visibility and controlling gaps with high accuracy.

The gap material according to the present invention is used to obtain an optical bonding adhesive. In the gap material according to the present invention, the 10% K value of the gap material is 10000 N/mm$^2$ or less. The gap material according to the present invention has the above-mentioned configuration, and is thus capable of improving the visibility and controlling gaps with high accuracy.

## BRIEF DESCRIPTION OF DRAWINGS

[Fig. 1] Fig. 1 is a cross-sectional view illustrating an example of a display device fabricated using the adhesive according to the present invention.

## MODES FOR CARRYING OUT THE INVENTION

Hereinafter, the details of the present invention will be described.

(Adhesive)

The adhesive according to the present invention contains a curable component and a gap material. In the adhesive according to the present invention, the 10% K value of the gap material is 10000 N/mm$^2$ or less. In the adhesive according to the present invention, the absolute value of the difference between the refractive index of the cured product obtained by curing the curable component at 23°C for 1 hour and the refractive index of the gap material is 0.1 or less.

The adhesive according to the present invention contains a curable component and a gap material. In the adhesive according to the present invention, the 10% K value of the gap material is 10000 N/mm$^2$ or less. In the adhesive according to the present invention, the absolute value of the difference between the refractive index of the cured product

obtained by curing the curable component at a wavelength of 350 nm and an irradiance of 1500 mJ/cm$^2$ and the refractive index of the gap material is 0.1 or less.

The adhesive according to the present invention has the above-mentioned configuration, and is thus capable of improving the visibility and controlling gaps with high accuracy.

In recent years, optical bonding has been utilized in various fields. For example, in a display device such as an in-vehicle display, the use of optical bonding is discussed in order to improve the visibility. Specifically, it is discussed to coat an image display element with a material used for optical bonding (optical bonding material, for example, a translucent material such as an adhesive), to dispose a transparent protective material on the surface of the optical bonding material on the opposite side to the image display element side, and to cure the optical bonding material, and the like. The cured product of the optical bonding material forms an adhesive layer that bonds the image display element and the transparent protective material together.

The viscosity of the optical bonding material may be low in the case of optical bonding materials used in display devices (for example, in-vehicle displays). In the case of optical bonding materials having a low viscosity, the optical bonding material flows on the image display element by, for example, the weight of the transparent protective material until the curing of the optical bonding material is completed, and it may not be possible to sufficiently secure the thickness (gap) of the cured product (adhesive layer) of the optical bonding material on the image display element. When a display device (for example, an in-vehicle display) is repeatedly exposed to temperature changes from low temperatures to high temperatures, stress may be generated between members (for example, an image display element and a transparent protective material) by the difference in linear expansion coefficient between the members. When the thickness (gap) of the cured product (adhesive layer) of the optical bonding material cannot be sufficiently secured, the stress generated between the members cannot be sufficiently relaxed, and cracking and peeling off of the cured product (adhesive layer) of the optical bonding material may occur. In order to relax the stress generated between members, it is required to secure a sufficient thickness (gap) of the cured product (adhesive layer) of the optical bonding material. Since the adhesive according to the present invention contains a specific gap material, the thickness (gap) of the adhesive layer can be controlled with high accuracy, and the thickness (gap) of the adhesive layer can be sufficiently secured. In the adhesive according to the present invention, since a specific curable component and a specific gap material are used, the difference between the refractive index of the cured product of the curable component and the refractive index of the gap material is relatively small in the adhesive layer. Hence, when the adhesive contains a gap material as well, the visibility can be improved.

In the case of conventional optical bonding materials, a hard gap material such as a glass spacer may be used in order to secure a sufficient thickness (gap) of the cured product (adhesive layer) of the optical bonding material. However, when a hard gap material is used, the members (for example, an image display element and a transparent protective material) may be damaged and the visibility may decrease. The specific gap material contained in the adhesive according to the present invention has a relatively low compressive elasticity modulus. Hence, scratching of the members (for example, an image display element and a transparent protective material) can be suppressed, and the visibility can be improved.

The ratio of the transmittance(T1) of the cured product obtained by curing the adhesive at 23°C for 1 hour at a wavelength of 650 nm to the transmittance (T2) of the cured product obtained by curing the curable component at 23°C for 1 hour at a wavelength of 650 nm is defined as the ratio (T1/T2). The ratio (T1/T2) is preferably 0.92 or more, more preferably 0.95 or more. The upper limit of the ratio (T1/T2) is not particularly limited. The ratio (T1/T2) may be 0.9999 or less. When the ratio (T1/T2) is equal to or more than the lower limit, the visibility can be further improved.

The transmittance (T2) of the cured product obtained by curing the curable component at 23°C for 1 hour at a wavelength of 650 nm is preferably 92% or more, more preferably 95% or more, still more preferably 98% or more. The upper limit of the transmittance (T2) is not particularly limited. The transmittance (T2) may be 99.9% or less. When the transmittance (T2) is equal to or more than the lower limit, the visibility can be further improved.

The transmittance (T1) can be measured as follows.

The adhesive is applied in a thickness of 0.1 mm and cured at 23°C for 1 hour to obtain a cured product. The transmittance at a wavelength of 650 nm is measured at 25°C using the obtained cured product. The transmittance (T1) can be measured using, for example, a spectrophotometer (double beam spectrophotometer ("U-2910" manufactured by Hitachi High-Tech Science Corporation)). An integrating sphere can be used as a detector.

The transmittance (T2) can be measured as follows.

The curable component is applied in a thickness of 0.1 mm and cured at 23°C for 1 hour to obtain a cured product. The transmittance at a wavelength of 650 nm is measured at 25°C using the obtained cured product. The transmittance (T2) can be measured using, for example, a spectrophotometer (double beam spectrophotometer ("U-2910" manufactured by Hitachi High-Tech Science Corporation)). An integrating sphere can be used as a detector. The ratio (T1/T2) can be calculated from the obtained values.

The ratio of the transmittance (T3) of the cured product obtained by curing the adhesive at a wavelength of 350 nm and an irradiance of 1500 mJ/cm$^2$ at a wavelength of 650 nm to the transmittance (T4) of the cured product

obtained by curing the curable component at a wavelength of 350 nm and an irradiance of 1500 mJ/cm$^2$ at a wavelength of 650 nm is defined as the ratio (T3/T4). The ratio (T3/T4) is preferably 0.92 or more, more preferably 0.95 or more. The upper limit of the ratio (T3/T4) is not particularly limited. The ratio (T3/T4) may be 0.9999 or less. When the ratio (T3/T4) is equal to or more than the lower limit, the visibility can be further improved.

The transmittance (T4) of the cured product obtained by curing the curable component at a wavelength of 350 nm and an irradiance of 1500 mJ/cm$^2$ at a wavelength of 650 nm is preferably 92% or more, more preferably 95% or more, still more preferably 98% or more. The upper limit of the transmittance (T4) is not particularly limited. The transmittance (T4) may be 99.9% or less. When the transmittance (T4) is equal to or more than the lower limit, the visibility can be further improved.

The transmittance (T3) can be measured as follows.

The adhesive is applied in a thickness of 0.1 mm and cured at a wavelength of 350 nm and an irradiance of 1500 mJ/cm$^2$ to obtain a cured product. The transmittance at a wavelength of 650 nm is measured at 25°C using the obtained cured product. The transmittance (T3) can be measured using, for example, a spectrophotometer (double beam spectrophotometer ("U-2910" manufactured by Hitachi High-Tech Science Corporation)). An integrating sphere can be used as a detector.

The transmittance (T4) can be measured as follows.

The curable component is applied in a thickness of 0.1 mm and cured at a wavelength of 350 nm and an irradiance of 1500 mJ/cm$^2$ to obtain a cured product. The transmittance at a wavelength of 650 nm is measured at 25°C using the obtained cured product. The transmittance (T4) can be measured using, for example, a spectrophotometer (double beam spectrophotometer ("U-2910" manufactured by Hitachi High-Tech Science Corporation)). An integrating sphere can be used as a detector. The ratio (T3/T4) can be calculated from the obtained values.

The adhesive may be a one-component type in which a main agent, a curing agent and the like are mixed together in advance, or a two-component type in which the main agent and the curing agent are separated. The adhesive may be a condensation curing type or an addition curing type. The adhesive may be cured using a catalyst such as platinum, or may be cured by moisture or the like. From the viewpoint of more effectively decreasing the residual stress in the cured product of the adhesive, the adhesive is cured preferably at room temperature and preferably at 25°C.

The adhesive can bond two adherends together, for example. The adhesive is preferably used to form an adhesive layer that bonds two adherends together. The adhesive is preferably used to relax the stress of the adhesive layer.

The adhesive may contain conductive particles or may not contain conductive particles. The adhesive may be used for conductive connection or may not be used for conductive connection. The adhesive may be used for the anisotropic conductive connection or may not be used for anisotropic conductive connection. The adhesive may not be a conductive material and may not be an anisotropic conductive material. The adhesive may be used in a liquid crystal display element or may not be used in a liquid crystal display element. The adhesive is preferably used in optical bonding applications. The adhesive is preferably used in a display device to fill the gap between the image display element and the transparent protective material, decrease the reflection loss occurring at the interface of the transparent protective material, and improve the visibility.

The viscosity of the adhesive at 25°C is preferably 200 mPa·s or more, more preferably 400 mPa·s or more, still more preferably 600 mPa·s or more. The viscosity of the adhesive at 25°C is preferably 100000 mPa·s or less, more preferably 70000 mPa·s or less, still more preferably 10000 mPa·s or less, particularly preferably 2000 mPa·s or less, most preferably 1000 mPa·s or less. As the viscosity of the adhesive is equal to or more than the lower limit and less than or equal to the upper limit, it is possible to prevent the adhesive from flowing until the curing of the adhesive is completed, and a sufficient thickness (gap) of the adhesive can be secured on the members (for example, an image display element and a transparent protective material). As a result, scratching of the members can be more effectively suppressed, and the visibility can be further improved.

The viscosity of the adhesive can be measured, for example, by a method in which the viscosity is measured using a single cylindrical rotating viscometer or a method in which the viscosity is measured using co-axis double cylindrical rotating viscometer and conical-plate type rotating viscometer.

(Gap material)

The adhesive according to the present invention contains a curable component and a gap material. The gap material has, for example, a role of regulating the spacing between two members. In the adhesive according to the present invention, the 10% K value (compressive elasticity modulus) when compressed by 10%) of the gap material is 10000 N/mm$^2$ or less. The 10% K value of the gap material is preferably 5000 N/mm$^2$ or less, more preferably 1000 N/mm$^2$ or less, still more preferably 500 N/mm$^2$ or less, particularly preferably 300 N/mm$^2$ or less, most preferably 100 N/mm$^2$ or less. The lower limit of the 10% K value of the gap material is not particularly limited. The 10% K value of the gap material may be 10 N/mm$^2$ or more. When the 10% K value of the gap material is less than or equal to the upper

limit, scratching of the members (for example, an image display element and a transparent protective material) can be more effectively suppressed, and the visibility can be further improved. When the 10% K value of the gap material is equal to or more than the lower limit, the gap can be controlled with higher accuracy.

The 10% K value of the gap material can be measured as follows.

Using a micro compression testing machine, one gap material is compressed at a smooth indenter end face of a cylinder (diameter of 100 μm, made of diamond) at a compression rate of 0.3 mN/sec, a maximum test load of 20 mN, and 25°C. The load value (N) and compressive displacement (mm) at this time are measured. From the obtained measurement values, the 10% K value of the gap material can be determined by the following equation. Examples of the micro compression testing machine include "Fischer Scope H-100" manufactured by FISCHER INSTRUMENTS K.K.. The 10% K value of the gap material is preferably calculated by arithmetically averaging the 10% K values of 50 gap materials arbitrarily selected.

$$10\%\ \text{K value of gap material}\ (\text{N/mm}^2) = (3/2^{1/2}) \cdot F \cdot S^{-3/2} \cdot R^{-1/2}$$

F: Load value (N) when the gap material is compressed and deformed by 10%
S: Compressive displacement (mm) when the gap material is compressed and deformed by 10%
R: Radius (mm) of gap material

The 10% K value indicates the hardness of the gap material universally and quantitatively. By using the 10% K value, the hardness of the gap material can be indicated quantitatively and unambiguously.

From the viewpoint of further improving the visibility, the refractive index (R1) of the gap material is preferably 1.40 or more, more preferably 1.41 or more and preferably 1.60 or less, more preferably 1.50 or less.

The refractive index (R1) of the gap material can be measured as follows.

A film having the same composition as the gap material and a thickness of about 1 μm is fabricated and left at 23°C for 1 hour to obtain a measurement film. The refractive index of the obtained film is measured using an Abbe refractometer ("ER-7MW" manufactured by ERMA) or the like. When it is difficult to prepare a film having the same composition as the gap material and a thickness of about 1 μm and the gap material is a minute sample such as powder or particles, the refractive index can be measured by a method conforming to JIS K7142: 2014 Plastics-Determination of refractive index Method B. Particularly when the refractive index is analyzed in a state where the gap material is contained in the adhesive, the curable component can be dissolved in a solvent such as toluene, the gap material can be recovered, washed and dried, and the refractive index can be measured.

The application of the gap material is not particularly limited. The gap material is suitably used in various applications. The gap material is preferably used to obtain an adhesive. The gap material is preferably used in an adhesive to bond two members together. The gap material is preferably used as a spacer. The gap material is preferably used as a spacer in the adhesive. Examples of the use of the gap material include a spacer for gap control and a spacer for stress relaxation. The spacer for gap control can be used for gap control of a stacked chip for securing a stand-off height and flatness, gap control of an optical component for securing the smoothness of a glass surface and the thickness of an adhesive layer. The spacer for stress relaxation can be used for stress relaxation of a sensor chip and the like, stress relaxation of an adhesive structure such as a pressure sensor, stress relaxation of an adhesive layer bonding two adherends together, and the like. The gap material can be used in pressure sensors, die bonding materials, conductive adhesives, optical bonding materials and the like. The gap material is preferably used to obtain an optical bonding adhesive.

In addition, the gap material is also suitably used as an inorganic filler, an additive for toner, an impact absorber, or a vibration absorber. For example, the gap material can be used as a substitute for rubber, a spring, or the like.

Hereinafter, other details of the gap material will be described. In the present specification, "(meth)acrylate" means one or both of "acrylate" and "methacrylate", and "(meth)acryl" means one or both of "acryl" and "methacryl".

(Other details of gap material)

The material of the gap material is not particularly limited. The material of the gap material is preferably an organic material. The material of the gap material is preferably a silicone resin, and the gap material preferably contains a silicone resin. The gap material is preferably particles, and is preferably silicone particles. The gap material is preferably a silicone spacer.

The gap material preferably does not contain a platinum catalyst or contains a platinum catalyst at 100 ppm or

less. When a platinum catalyst is used, it is more preferable as the content of the platinum catalyst is smaller. When the content of the platinum catalyst is higher, the reliability tends to decrease. The content of the platinum catalyst is more preferably 80 ppm or less, further preferably 60 ppm or less, still more preferably 50 ppm or less, yet still more preferably 40 ppm or less, particularly preferably 30 ppm or less, particularly preferably 20 ppm or less, most preferably 10 ppm or less.

In general, silicone particles are often obtained by polymerizing a monomer using a platinum catalyst. Such silicone particles contain a platinum catalyst inside even if washed, and the content of the platinum catalyst exceeds 100 ppm. On the other hand, the silicone particles obtained without using a platinum catalyst generally do not contain a platinum catalyst.

The material of the silicone particles is preferably organopolysiloxane, more preferably a silane alkoxide. One kind of organopolysiloxane or one kind of silane alkoxide may be used singly, or two or more kinds of organopolysiloxanes or two or more kinds of silane alkoxides may be used concurrently.

From the viewpoint of further improving the visibility and the viewpoint of controlling the gap with higher accuracy, the silane alkoxide preferably contains a silane alkoxide A represented by the following Formula (1A) or a silane alkoxide B represented by the following Formula (1B). The silane alkoxide may contain a silane alkoxide A represented by the following Formula (1A), or may contain a silane alkoxide B represented by the following Formula (1B).

$$Si(R1)_n(OR2)_{4-n} \dots \qquad (1A)$$

In Formula (1A), R1 represents a hydrogen atom, a phenyl group or an alkyl group having 1 to 30 carbon atoms, R2 represents an alkyl group having 1 to 6 carbon atoms, and n represents an integer of 0 to 2. When n is 2, a plurality of R1s may be the same as or different from each other. A plurality of R2s may be the same as or different from each other.

When R1 in Formula (1A) is an alkyl group having 1 to 30 carbon atoms, specific examples of R1 include a methyl group, an ethyl group, a propyl group, an isopropyl group, an isobutyl group, a n-hexyl group, a cyclohexyl group, a n-octyl group, and a n-decyl group. This alkyl group has preferably 10 or less, more preferably 6 or less carbon atoms. Alkyl groups include cycloalkyl groups.

Specific examples of R2 include a methyl group, an ethyl group, an n-propyl group, an isopropyl group, an n-butyl group, and an isobutyl group.

Specific examples of the silane alkoxide A include tetramethoxysilane, tetraethoxysilane, methyltrimethoxysilane, methyltriethoxysilane, ethyltrimethoxysilane, ethyltriethoxysilane, isopropyltrimethoxysilane, isobutyltrimethoxysilane, cyclohexyltrimethoxysilane, n-hexyltrimethoxysilane, n-octyltriethoxysilane, n-decyltrimethoxysilane, phenyltrimethoxysilane, dimethyldimethoxysilane, dimethyldiethoxysilane, diisopropyldimethoxysilane, and diphenyldimethoxysilane. Silane alkoxides other than these may be used.

$$Si(R1)_n(OR2)_{4-n} \dots \qquad (1B)$$

In Formula (1B), R1 represents a hydrogen atom, a phenyl group, an alkyl group having 1 to 30 carbon atoms, or an organic group having a polymerizable double bond and 1 to 30 carbon atoms, R2 represents an alkyl group having 1 to 6 carbon atoms, and n represents an integer of 0 to 2. When n is 2, a plurality of R1s may be the same as or different from each other. A plurality of R2s may be the same as or different from each other. However, at least one R1 is an organic group having a polymerizable double bond and 1 to 30 carbon atoms. At least one R1 is preferably a vinyl group, a styryl group or a (meth)acryloxy group, more preferably a vinyl group or a (meth)acryloxy group, still more preferably a (meth)acryloxy group.

When R1 in Formula (1B) is an alkyl group having 1 to 30 carbon atoms, specific examples of R1 include a methyl group, an ethyl group, a propyl group, an isopropyl group, an isobutyl group, a n-hexyl group, a cyclohexyl group, a n-octyl group, and a n-decyl group. This alkyl group has preferably 10 or less, more preferably 6 or less carbon atoms. Alkyl groups include cycloalkyl groups.

Examples of the polymerizable double bond include a carbon-carbon double bond. When R1 is an organic group having a polymerizable double bond and 1 to 30 carbon atoms, specific examples of R1 include a vinyl group, a styryl group, an allyl group, an isopropenyl group, and a 3-(meth)acryloxyalkyl group. Examples of the styryl group include a p-styryl group, an o-styryl group, and an m-styryl group. Examples of the (meth)acryloxyalkyl group include a (meth)acryloxymethyl group, a (meth)acryloxyethyl group, and a (meth)acryloxypropyl group. The organic group having a polymerizable double bond and 1 to 30 carbon atoms has preferably 2 or more carbon atoms and preferably 30 or less, more preferably 10 or less carbon atoms. The term "(meth)acryloxy" refers to acryloxy and methacryloxy.

Specific examples of R2 include a methyl group, an ethyl group, an n-propyl group, an isopropyl group, an n-butyl group, and an isobutyl group.

From the viewpoint of further improving the visibility and the viewpoint of controlling the gap with higher accuracy, the silane alkoxide preferably contains dialkoxysilane.

In the hydrolyzed condensate of the silane alkoxide, it is preferable that monoalkoxysilane is 0% by weight (unused) or more and 20% by weight or less, dialkoxysilane is 70% by weight or more and 99.9% by weight or less, and the sum of trialkoxysilane and tetraalkoxysilane is 0.1% by weight or more and 30% by weight or less in 100% by weight of the silane alkoxide. In the hydrolyzed condensate of the silane alkoxide, it is preferable that monoalkoxysilane is 0% by weight (unused) or more and 15% by weight or less, dialkoxysilane is 75% by weight or more and 99% by weight or less, and the sum of trialkoxysilane and tetraalkoxysilane is 1% by weight or more and 25% by weight or less in 100% by weight of the silane alkoxide. As the hydrolyzed condensate of the silane alkoxide satisfies the preferable aspects, it is possible to obtain a gap material capable of further improving the visibility and controlling the gap with higher accuracy.

From the viewpoint of adjusting the particle diameter more easily, it is preferable that the silane alkoxide contains a silane alkoxide having a polymerizable functional group, and it is more preferable that the silane alkoxide contains a silane alkoxide having a polymerizable double bond. Examples of the silane alkoxide having a polymerizable double bond include vinyltrimethoxysilane, vinyltriethoxysilane, dimethoxymethylvinylsilane, dimethoxyethylvinylsilane, diethoxymethylvinylsilane, diethoxyethylvinylsilane, ethylmethyldivinylsilane, methylvinyldimethoxysilane, ethylvinyldimethoxysilane, methylvinyldiethoxysilane, ethylvinyldiethoxysilane, p-styryltrimethoxysilane, 3-methacryloxypropylmethyldimethoxysilane, 3-methacryloxypropyltrimethoxysilane, 3-methacryloxypropylmethyldiethoxysilane, 3-methacryloxypropyltriethoxysilane, and 3-acryloxypropyltrimethoxysilane. Cyclic siloxane may be used, or modified (reactive) silicone oil and the like may be used. Examples of the cyclic siloxane include decamethylcyclopentasiloxane. Examples of the modified silicone oil include one-terminal modified silicone oil, both-terminal silicone oil, and side-chain type silicone oil.

Examples of a specific method for fabricating the silicone particles include a method in which the silane alkoxide is condensed in advance to obtain an oligomer and then a polymerization reaction is conducted by a suspension polymerization method, a dispersion polymerization method, a mini emulsion polymerization method, an emulsion polymerization method, or the like to fabricate silicone particles.

From the viewpoint of further improving the visibility, the silicone particles preferably include a plurality of inorganic oxide particles. In the silicone particles, at least a part of the inorganic oxide particles is present inside the silicone particles. In the silicone particles, a part of the inorganic oxide particles may be present outside the silicone particles or all of the inorganic oxide particles may be present inside the silicone particles. In the silicone particles, at least a part of the inorganic oxide particles is present outside the silicone particles. A part of the inorganic oxide particles may be present outside the silicone particles or all of the inorganic oxide particles may be present outside the silicone particles. In the silicone particles, it is more preferable that at least a part of the inorganic oxide particles covers the silicone particles. A part of the inorganic oxide particles may cover the silicone particles or all of the inorganic oxide particles may cover the silicone particles. The volume of the portion of arbitrary one inorganic oxide particle present inside the silicone particle is preferably 10% or more, more preferably 30% or more, still more preferably 50% or more in 100% of the volume of the inorganic oxide particle. The volume of the portion of arbitrary one inorganic oxide particle present inside the silicone particle is preferably 100% or less and may be less than 100% in 100% of the volume of the inorganic oxide particle. From the viewpoint of improving the dispersibility of the silicone particles, the silicone particles are preferably silicone particles in which an inorganic oxide particle of which a part is present inside the silicone particle and an inorganic oxide particle of which the entirety is present inside the silicone particle are mixed.

Examples of the material of the inorganic oxide particles include silica, silicone resin, fluororesin, alumina, barium titanate, zirconia, silicate glass, borosilicate glass, lead glass, soda-lime glass and alumina silicate glass.

The material of the inorganic oxide particles preferably contains silica, silicone resin, or fluororesin, more preferably contains silica or silicone resin, still more preferably contains silica, and is particularly preferably silica. When the material of the inorganic oxide particles satisfies the preferable aspects, the visibility can be further improved and the gap can be controlled with higher accuracy.

The particle diameter of the inorganic oxide particles is preferably 30 nm or more, more preferably more than 60 nm, still more preferably 80 nm or more, particularly preferably 100 nm or more. The particle diameter of the inorganic oxide particles is preferably 500 nm or less, more preferably 200 nm or less. When the particle diameter of the inorganic oxide particles satisfies the lower limit and the upper limit, the visibility can be further improved and the gap can be controlled with higher accuracy.

The particle diameter of the inorganic oxide particles means a diameter when the inorganic oxide particles are a true sphere. When the inorganic oxide particles have a shape other than a true sphere, the particle diameter of the inorganic oxide particles means a diameter when the inorganic oxide particles are assumed to be a true sphere corresponding to the volume. The particle diameter of the inorganic oxide particles is preferably an average particle diameter, more preferably a number average particle diameter. The particle diameter of the inorganic oxide particles is determined by observing arbitrary 50 inorganic oxide particles under an electron microscope or an optical microscope and calculating the average value and performing laser diffraction type particle size distribution measurement. In the observation under an electron microscope or an optical microscope, the particle diameter of the inorganic oxide particles per one particle is determined as a particle diameter corresponding to an equivalent circle diameter. In the observation under an electron

microscope or an optical microscope, the average particle diameter obtained from the equivalent circle diameters of arbitrary 50 coating particles is substantially equal to the average particle diameter corresponding to an equivalent sphere diameter. In the laser diffraction type particle size distribution measurement, the particle diameter of the coating particles per one particle is determined as a particle diameter corresponding to an equivalent sphere diameter. The particle diameter of the coating particles is preferably calculated by laser diffraction particle size distribution measurement.

From the viewpoint of controlling the gap with higher accuracy, the material of the gap material preferably contains an organic material.

Examples of the organic material include polyolefin resins such as polyethylene, polypropylene, polystyrene, polyvinyl chloride, polyvinylidene chloride, polyisobutylene, and polybutadiene; acrylic resins such as polymethyl methacrylate and polymethyl acrylate; polycarbonate, polyamide, phenol formaldehyde resin, melamine formaldehyde resin, benzoguanamine formaldehyde resin, urea formaldehyde resin, phenol resin, melamine resin, benzoguanamine resin, urea resin, epoxy resin, unsaturated polyester resin, saturated polyester resin, polyethylene terephthalate, polysulfone, polyphenylene oxide, polyacetal, polyimide, polyamideimide, polyether ether ketone, polyether sulfone, divinylbenzene polymer, and divinylbenzene-based copolymer. Examples of the divinylbenzene copolymer include divinylbenzene-styrene copolymer and divinylbenzene-(meth)acrylate copolymer. Since the compression properties of the gap material can be easily controlled in a suitable range, the material of the gap material is preferably a polymer obtained by polymerizing one or two or more polymerizable monomers having an ethylenically unsaturated group.

When the gap material is obtained by polymerizing a polymerizable monomer having an ethylenically unsaturated group, examples of the polymerizable monomer having an ethylenically unsaturated group include non-crosslinkable monomers and crosslinkable monomers.

Examples of the non-crosslinkable monomers include, as a vinyl compound, styrene monomers such as styrene, $\alpha$-methyl styrene, and chlorostyrene; vinyl ether compounds such as methyl vinyl ether, ethyl vinyl ether, and propyl vinyl ether; acid vinyl ester compounds such as vinyl acetate, vinyl butylate, vinyl laurate, and vinyl stearate; and halogen-containing monomers such as vinyl chloride, and vinyl fluoride; as a (meth)acrylic compound, alkyl (meth)acrylate compounds such as methyl (meth)acrylate, ethyl (meth)acrylate, propyl (meth)acrylate, butyl (meth)acrylate, 2-ethylhexyl (meth)acrylate, lauryl (meth)acrylate, cetyl (meth)acrylate, stearyl (meth)acrylate, cyclohexyl (meth)acrylate, and isobornyl (meth)acrylate; oxygen atom-containing (meth)acrylate compounds such as 2-hydroxyethyl (meth)acrylate, glycerol (meth)acrylate, polyoxyethylene (meth)acrylate, and glycidyl (meth)acrylate; nitrile-containing monomers such as (meth)acrylonitrile; and halogen-containing (meth)acrylate compounds such as trifluoromethyl (meth)acrylate, and pentafluoroethyl (meth)acrylate; as an $\alpha$-olefin compound, olefin compounds such as diisobutylene, isobutylene, LINEALENE, ethylene, and propylene; and as a conjugated diene compound, isoprene and butadiene.

Examples of the crosslinkable monomers include, as a vinyl compound, vinyl-based monomers such as divinylbenzene, 1,4-divinyloxybutane, and divinyl sulfone; as a (meth)acrylic compound, polyfunctional (meth)acrylate compounds such as tetramethylolmethane tetra(meth)acrylate, polytetramethylene glycol diacrylate, tetramethylolmethane tri(meth)acrylate, tetramethylolmethane di(meth)acrylate, trimethylolpropane tri(meth)acrylate, dipentaerythritol hexa(meth)acrylate, dipentaerythritol penta(meth)acrylate, glycerol tri(meth)acrylate, glycerol di(meth)acrylate, polyethylene glycol di(meth)acrylate, polypropylene glycol di(meth)acrylate, polytetramethylene glycol di(meth)acrylate, and 1,4-butanediol di(meth)acrylate; as an allyl compound, triallyl (iso)cyanurate, triallyl trimellitate, diallyl phthalate, diallyl acrylamide, and diallyl ether; as a silane compound, silane alkoxide compounds such as tetramethoxysilane, tetraethoxysilane, methyltrimethoxysilane, methyltriethoxysilane, ethyltrimethoxysilane, ethyltriethoxysilane, isopropyltrimethoxysilane, isobutyltrimethoxysilane, cyclohexyl trimethoxysilane, n-hexyltrimethoxysilane, n-octyltriethoxysilane, n-decyltrimethoxysilane, phenyltrimethoxysilane, dimethyldimethoxysilane, dimethyidiethoxysilane, diisopropyldimethoxysilane, trimethoxysilyl styrene, $\gamma$-(meth)acryloxypropyltrimethoxysilane, 1,3-divinyltetramethyldisiloxane, methylphenyldimethoxysilane, and diphenyidimethoxysilane; polymerizable double bond-containing silane alkoxides such as vinyltrimethoxysilane, vinyltriethoxysilane, dimethoxymethylvinylsilane, dimethoxyethylvinylsilane, diethoxymethylvinylsilane, diethoxyethylvinylsilane, ethylmethyldivinylsilane, methylvinyldimethoxysilane, ethylvinyldimethoxysilane, methylvinyldiethoxysilane, ethylvinyldiethoxysilane, p-styryltrimethoxysilane, 3-methacryloxypropylmethyldimethoxysilane, 3-methacryloxypropyl trimethoxysilane, 3-methacryloxypropylmethyldiethoxysilane, 3-methacryloxypropyl triethoxy silane, and 3-acryloxypropyltrimethoxysilane; cyclic siloxanes such as decamethylcyclopentasiloxane; modified (reactive) silicone oils such as one-terminal modified silicone oil, both-terminal silicone oil, and side-chain type silicone oil; and carboxyl group-containing monomers such as (meth)acrylic acid, maleic acid, and maleic anhydride.

The gap material can be obtained by polymerizing the polymerizable monomers having an ethylenically unsaturated group. The polymerization method is not particularly limited, and examples thereof include known methods such as radical polymerization, ionic polymerization, polycondensation (condensation polymerization), addition condensation, living polymerization, and living radical polymerization. Other polymerization methods include suspension polymerization in the presence of a radical polymerization initiator.

The gap material may be organic-inorganic hybrid particles. The gap material may be core-shell particles. When the gap material is organic-inorganic hybrid particles, examples of the inorganic substance, which is a material of the

gap material, include silica, alumina, barium titanate, zirconia, and carbon black. It is preferable that the inorganic substance is not a metal. The gap material formed of silica is not particularly limited, and examples thereof include particles obtained by hydrolyzing a silicon compound having two or more hydrolyzable alkoxysilyl groups to form crosslinked polymer particles and then performing firing as necessary. Examples of the organic-inorganic hybrid particles include organic-inorganic hybrid particles formed of crosslinked alkoxysilyl polymer and an acrylic resin.

The organic-inorganic hybrid particles are preferably core-shell type organic-inorganic hybrid particles having a core and a shell disposed on the surface of the core. The core is preferably an organic core. The shell is preferably an inorganic shell. The gap material is preferably organic-inorganic hybrid particles having an organic core and an inorganic shell disposed on the surface of the organic core.

Examples of the material of the organic core include the organic material described above.

Examples of the material of the inorganic shell include silica, alumina, barium titanate, zirconia, and carbon black. The material of the inorganic shell is preferably silica. It is preferable that the inorganic shell is formed by forming metal alkoxide into a shell-like material on the surface of the core by a sol-gel method and then firing the shell-like material. The metal alkoxide is preferably a silane alkoxide. It is preferable that the inorganic shell is formed of a silane alkoxide.

The gap material may be formed of only an organic material. In this case, the compression properties of the gap material can be easily controlled in a suitable range.

When the gap material is particles, the average particle diameter of the gap materials is preferably 30 μm or more, more preferably 50 μm or more, still more preferably more than 100 μm. When the gap material is particles, the average particle diameter of the gap materials is preferably 500 μm or less, more preferably 200 μm or less. When the average particle diameter of the gap materials satisfies the lower limit and the upper limit, the gap material can be more suitably used in optical bonding applications, and the gap material can be more suitably used to obtain an optical bonding adhesive.

The particle diameter of the gap material means a diameter when the gap material is a true sphere. When the gap material has a shape other than a true sphere, the particle diameter of the gap material means a diameter when the gap material is assumed to be a true sphere corresponding to the volume. The average particle diameter of the gap materials is preferably a number average particle diameter. The average particle diameter of the gap materials can be measured using an arbitrary particle size distribution measuring apparatus. For example, the particle diameter can be measured using a particle size distribution measuring apparatus employing principles such as laser light scattering, electric resistance change, and image analysis after imaging. Specific examples of the method for measuring the average particle diameter of the gap materials include a method in which the particle diameters of about 100000 gap materials are measured using a particle size distribution measuring apparatus ("Multisizer 4" manufactured by Beckman Coulter, Inc.) and the average particle diameter is calculated.

The coefficient of variation (CV value) of the particle diameter of the gap material is preferably 10% or less, more preferably 7% or less, still more preferably 5% or less. When the CV value is equal to or less than the upper limit, the gap can be controlled with higher accuracy, and the gap material can be more suitably used in optical bonding applications.

The CV value is expressed by the following equation.

$$\text{CV value (\%)} = (\rho/Dn) \times 100$$

ρ: Standard deviation of particle diameters of gap materials
Dn: Average value of particle diameters of gap materials

The content of the gap material in 100% by weight of the adhesive is preferably 0.01% by weight or more, more preferably 0.1% by weight or more and preferably 80% by weight or less, more preferably 60% by weight or less, still more preferably 40% by weight or less, particularly preferably 20% by weight or less, most preferably 10% by weight or less. When the content of the gap material is equal to or more than the lower limit and less than or equal to the upper limit, the visibility can be further improved and the gap can be controlled with higher accuracy. When the content of the gap material is equal to or more than the lower limit and less than or equal to the upper limit, the gap material can more effectively exert the function as a spacer.

(Curable component)

The adhesive according to the present invention contains a curable component and a gap material. The curable component is a component different from the gap material. The gap material is preferably dispersed in the curable

component. The curable component preferably has fluidity. The constituents are preferably in the form of a paste. The paste form includes a liquid form.

From the viewpoint of further improving the visibility, the refractive index (R2) of the cured product obtained by curing the curable component at 23°C for 1 hour is preferably 1.40 or more, more preferably 1.41 or more and preferably 1.60 or less, more preferably 1.50 or less.

The refractive index (R2) of the cured product can be measured as follows.

The curable component is cured at 23°C for 1 hour to fabricate a film having a thickness of about 1 μm. The refractive index of the obtained film is measured using an Abbe refractometer ("ER-7MW" manufactured by ERMA) or the like.

In the adhesive according to the present invention, the absolute value of the difference between the refractive index (R2) of the cured product obtained by curing the curable component at 23°C for 1 hour and the refractive index (R1) of the gap material is 0.1 or less. From the viewpoint of further improving the visibility, the absolute value of the difference between the refractive index (R2) of the cured product and the refractive index (R1) of the gap material is preferably 0.08 or less, more preferably 0.05 or less, still more preferably 0.02 or less. The absolute value of the difference between the refractive index (R2) of the cured product and the refractive index (R1) of the gap material may be 0 or more.

From the viewpoint of further improving the visibility, the refractive index (R3) of the cured product obtained by curing the curable component at a wavelength of 350 nm and an irradiance of 1500 mJ/cm$^2$ is preferably 1.40 or more, more preferably 1.41 or more and preferably 1.60 or less, more preferably 1.50 or less.

The refractive index (R3) of the cured product can be measured as follows.

The curable component is cured at a wavelength of 350 nm and an irradiance of 1500 mJ/cm$^2$ to fabricate a film having a thickness of about 1 μm. The refractive index of the obtained film is measured using an Abbe refractometer ("ER-7MW" manufactured by ERMA) or the like.

In the adhesive according to the present invention, the absolute value of the difference between the refractive index (R3) of the cured product obtained by curing the curable component at a wavelength of 350 nm and an irradiance of 1500 mJ/cm$^2$ and the refractive index (R1) of the gap material is 0.1 or less. From the viewpoint of further improving the visibility, the absolute value of the difference between the refractive index (R3) of the cured product and the refractive index (R1) of the gap material is preferably 0.08 or less, more preferably 0.05 or less. The absolute value of the difference between the refractive index (R3) of the cured product and the refractive index (R1) of the gap material may be 0 or more.

Examples of the method for controlling the absolute value of the difference between the refractive index (R2) of the cured product and the refractive index (R1) of the gap material and the absolute value of the difference between the refractive index (R3) of the cured product and the refractive index (R1) of the gap material in the preferable ranges include the following methods. A method in which a low refractive index filler (silica, fluororesin, or the like) is added to the curable component. A method in which a silane compound having a radically polymerizable functional group containing fluorine in the side chain is used as a material of the gap material. A method in which the gap material is covered with silica or the like to decrease the difference in refractive index at the interface between the gap material and the curable component.

The curable component is not particularly limited. Examples of the curable component include a thermosetting component, a photocurable component, and a room temperature curable component. When a thermosetting component or a photocurable component is used as the curable component, residual stress may be generated in the cured product of the adhesive (cured product of the curable component). Since the residual stress in the cured product of the adhesive (cured product of the curable component) may affect reliability and the like, it is necessary to decrease the residual stress as much as possible. Examples of the method for decreasing the residual stress in the cured product of the adhesive (cured product of the curable component) include a method in which a room temperature curable component is used as the curable component. The curable component is preferably a room temperature curable component. Room temperature is, for example, 25°C.

From the viewpoint of further improving the visibility, from the viewpoint of more effectively suppressing the generation of residual stress, and from the viewpoint of more effectively enhancing the heat resistance, the curable component preferably contains an acrylic resin or a silicone resin, and more preferably contains a silicone resin.

The acrylic resin may be a polymer of a (meth)acrylic compound. When the acrylic resin is obtained by polymerizing a (meth)acrylic compound, examples of the (meth)acrylic compound include the above-mentioned non-crosslinkable (meth)acrylic compounds and the above-mentioned crosslinkable (meth)acrylic compounds. The acrylic resin is preferably a room temperature curable resin.

The acrylic resin can be obtained by polymerizing the (meth)acrylic compound by a known method. Examples of this method include a method in which suspension polymerization is conducted in the presence of a radical polymerization initiator.

Examples of the acrylic resin include polymethyl methacrylate and polymethyl acrylate. From the viewpoint of further improving the visibility, from the viewpoint of more effectively suppressing the generation of residual stress, and from the viewpoint of more effectively enhancing the heat resistance, the acrylic resin is preferably polymethyl methacrylate.

The silicone resin may be an organopolysiloxane compound. The organopolysiloxane compound may have a hydroxyl group at the terminal or a vinyl group at the terminal. The silicone resin may be a polypropylene oxide having a methyldimethoxysilyl group. The silicone resin is preferably a room temperature curable resin.

The material of the silicone resin may be the material of the silicone particles described above. The silicone resin can be obtained by polymerizing the material of the silicone particles described above by a known method. Examples of this method include a method in which a polymerization reaction is conducted using a silane compound to form a siloxane bond.

Examples of the silicone resin include organopolysiloxane and polyorganosylsesquioxane. From the viewpoint of further improving the visibility, from the viewpoint of more effectively suppressing the generation of residual stress, and from the viewpoint of more effectively enhancing the heat resistance, the silicone resin is preferably organopolysiloxane.

The curable component preferably contains a silicone resin represented by the following Formula (1). The silicone resin preferably contains a structure represented by the following Formula (1).

[Chemical 6]

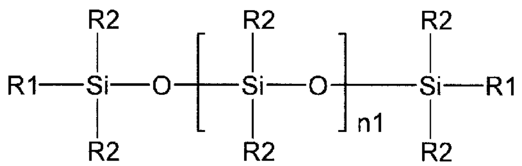

(1)

In Formula (1), R1 independently represents an alkenyl group having 2 to 6 carbon atoms and R2 independently represents an alkyl group having 1 to 6 carbon atoms or an aryl group having 6 to 20 carbon atoms. In Formula (1), n1 is a number to set the viscosity of the alkenyl group-containing polyorganosiloxane represented by Formula (1) at 23°C to 10 mPa·s to 1000000 mPa·s.

In addition to the curable component and the gap material, the adhesive may contain a vinyl resin, a thermoplastic resin, a curable resin, a thermoplastic block copolymer, an elastomer, a solvent and the like. One kind of these components may be used singly, and two or more kinds thereof may be used concurrently.

Examples of the vinyl resin include a vinyl acetate resin, an acrylic resin, and a styrene resin. Examples of the thermoplastic resin include a polyolefin resin, an ethylene-vinyl acetate copolymer resin, and a polyamide resin. Examples of the curable resin include an epoxy resin, a urethane resin, a polyimide resin, and an unsaturated polyester resin. The curable resin may be a room temperature curable resin, a thermosetting resin, a photocurable resin, or a moisture-curable resin. The curable resin may be used in combination with a curing agent. Examples of the thermoplastic block copolymer include a styrene-butadiene-styrene block copolymer, a styrene-isoprene-styrene block copolymer, a hydrogenated styrene-butadiene-styrene block copolymer, and a hydrogenated styrene-isoprene-styrene block copolymer. Examples of the elastomer include a styrene-butadiene copolymer rubber and an acrylonitrile-styrene block copolymer rubber.

Examples of the solvent include water and an organic solvent. An organic solvent is preferable because it can be easily removed. Examples of the organic solvent include alcohol compounds such as ethanol, ketone compounds such as acetone, methyl ethyl ketone and cyclohexanone, aromatic hydrocarbon compounds such as toluene, xylene and tetramethylbenzene, glycol ether compounds such as cellosolve, methyl cellosolve, butyl cellosolve, carbitol, methyl carbitol, butyl carbitol, propylene glycol monomethyl ether, dipropylene glycol monomethyl ether, dipropylene glycol diethyl ether and tripropylene glycol monomethyl ether, ester compounds such as ethyl acetate, butyl acetate, butyl lactate, cellosolve acetate, butyl cellosolve acetate, carbitol acetate, butyl carbitol acetate, propylene glycol monomethyl ether acetate, dipropylene glycol monomethyl ether acetate and propylene carbonate, aliphatic hydrocarbon compounds such as octane and decane, and petroleum solvents such as petroleum ether and naphtha.

In addition to the curable component and the gap material, the adhesive may contain, for example, various additives such as a filler, an extender, a softener, a plasticizer, a polymerization catalyst, a curing catalyst, a colorant, an antioxidant, a thermal stabilizer, a light stabilizer, an ultraviolet absorber, a lubricant, an antistatic agent, and a flame retardant.

As a method for dispersing the gap material in the curable component, a conventionally known dispersion method can be used, and the dispersion method is not particularly limited. Examples of the method for dispersing the gap material in the curable component include the following methods. A method in which the gap material is added to the curable component and then the mixture is kneaded using a planetary mixer or the like for dispersion. A method in which the gap material is uniformly dispersed in water or an organic solvent using a homogenizer or the like, then this

dispersion is added to the curable component, and the mixture is kneaded using a planetary mixer or the like for dispersion. A method in which the curable component is diluted with water, an organic solvent, or the like, then the gap material is added to the diluted curable component, and the mixture is kneaded using a planetary mixer or the like for dispersion.

The content of the curable component in 100% by weight of the adhesive is preferably 10% by weight or more, more preferably 30% by weight or more, still more preferably 50% by weight or more, particularly preferably 70% by weight or more and preferably 99.99% by weight or less, more preferably 99.9% by weight or less. When the content of the curable component is equal to or more than the lower limit and less than or equal to the upper limit, the adhesive layer can be more favorably formed using the adhesive, and the gap material can more effectively exert the function as a spacer.

(Display device)

The display device according to the present invention includes a first member, an image display element, which is a second member, and an adhesive layer, which bonds the first member and the second member together. In the display device according to the present invention, the adhesive layer is a cured product of the adhesive described above. The adhesive layer is preferably formed by a cured product of the adhesive.

Fig. 1 is a cross-sectional view illustrating an example of a display device fabricated using the adhesive according to the present invention.

A display device 1 illustrated in Fig. 1 includes a first member 3, an image display element, which is a second member 4, and an adhesive layer 5, which bonds the first member 3 and the second member 4 together. The adhesive layer 5 is a cured product of an adhesive containing a gap material 2 and a curable component.

The gap material 2 is present between the first member 3 and the second member 4, and constant spacing (gap) between the first member 3 and the second member 4 is maintained. By the gap material 2, the thickness of the adhesive layer 5 is constantly maintained and the thickness of the adhesive layer 5 is secured.

The thickness of the adhesive layer is preferably 30 μm or more, more preferably 50 μm or more and preferably 500 μm or less, more preferably 200 μm or less. When the thickness of the adhesive layer is equal to or more than the lower limit and less than or equal to the upper limit, the stress generated between the members can be relaxed more effectively and it is possible to more effectively prevent the adhesive layer from cracking and the adhesive layer from peeling off.

The method for fabricating the display device is not particularly limited. An example of the method for fabricating the display device includes a method in which the adhesive is disposed between the first member and the second member to obtain a stacked body and then the adhesive is cured.

The first member is preferably a transparent protective material. Examples of the material of the transparent protective material include glass and plastic. The transparent protective material is preferably a translucent material. The transparent protective material is preferably a material, which protects the surface of the image display element.

Examples of the display device include a liquid crystal display device and an in-vehicle display.

The present invention will be specifically described below by way of Examples and Comparative Examples. The present invention is not limited only to the following Examples.

(Gap material 1)

Prepared was a solution A in which 0.5 parts by weight of 1,1,3,3-tetramethylbutylperoxy-2-ethylhexanoate (polymerization initiator, "PEROCTA O" manufactured by NOF Corporation) was dissolved in 30 parts by weight of both-terminal acrylic silicone oil ("X-22-2445" manufactured by Shin-Etsu Chemical Co., Ltd.). In 150 parts by weight of ion-exchanged water, 0.8 parts by weight of a 40% by weight aqueous solution of triethanolamine lauryl sulfate (emulsifier) and 80 parts by weight of a 5% by weight aqueous solution of polyvinyl alcohol (polymerization degree: about 2000, saponification degree: 86.5 mol% to 89 mol%, "GOHSENOL GH-20" manufactured by NIHON GOSEI KAKO Co., Ltd.) were mixed to prepare an aqueous solution B. The solution A was charged in a separable flask placed in a warm bath, and then the aqueous solution B was added. After that, it was confirmed that the particle diameter became a predetermined value. After that, the temperature was raised to 90°C, and polymerization was conducted for 9 hours to obtain silicone particles. The entire amount of the silicone particles after polymerization was washed with water by centrifugation, classified, and then freeze-dried to obtain a gap material 1. With regard to the obtained gap material 1, the average particle diameter was 121 μm and the CV value of the particle diameter was 12%.

(Gap material 2)

In a 500 ml separable flask placed in a warm bath, 7.0 parts by weight of the silicone particles obtained in the same manner as the gap material 1, 0.6 parts by weight of hexadecyltrimethylammonium bromide, 240 parts by weight

of distilled water, and 120 parts by weight of methanol were charged. After the mixture was stirred at 40°C for 1 hour, 2.1 parts by weight of divinylbenzene and 0.35 parts by weight of styrene were added to the mixture, the temperature was raised to 75°C, and stirring was performed for 0.5 hour. After that, 0.28 parts by weight of dimethyl 2,2'-azobis(isobutyrate) was added, and the mixture was stirred and reacted for 8 hours. The entire amount of the particles after polymerization was washed with water by centrifugation to obtain a gap material 2. With regard to the obtained gap material 2, the average particle diameter was 121 μm and the CV value of the particle diameter was 12%.

(Gap material 3)

In a 500 ml separable flask placed in a warm bath, 7.0 parts by weight of the silicone particles obtained in the same manner as the gap material 1 and 88.5 parts by weight of distilled water were charged, and 0.2 parts by weight of silica particles ("QSG-100" manufactured by Shin-Etsu Chemical Co., Ltd.) previously dispersed in 4.0 parts by weight of methanol was gently dropped while irradiating the mixture with ultrasonic waves. After that, the mixture was stirred at room temperature for 6 hours to cover the surface of the silicone particles with silica particles. The entire amount of the particles after treatment was washed with water by centrifugation to obtain a gap material 3. With regard to the obtained gap material 3, the average particle diameter was 121 μm and the CV value of the particle diameter was 12%.

(Gap material 4)

To 10 parts by weight of polytetramethylene glycol diacrylate, 10 parts by weight of cyclohexyl methacrylate, and 80 parts by weight of isobornyl acrylate, 6.0 parts by weight of benzoyl peroxide ("NYPER BW" manufactured by NOF Corporation) was added, 510 parts by weight of ion-exchanged water was further added, and the mixture was stirred until to have a predetermined particle diameter. After that, 510 parts by weight of a 5% by weight aqueous solution of polyvinyl alcohol was added, heating was started, and the mixture was reacted at 85°C for 10 hours to obtain acrylic resin particles. The acrylic resin particles were washed with water, classified, and then freeze-dried to obtain a gap material 4. With regard to the obtained gap material 4, the average particle diameter was 118 μm and the CV value of the particle diameter was 15%.

(Gap material 5)

To 100 parts by weight of divinylbenzene, 6.0 parts by weight of benzoyl peroxide ("NYPER BW" manufactured by NOF Corporation) was added, 510 parts by weight of ion-exchanged water was further added, and the mixture was stirred until to have a predetermined particle diameter. After that, 510 parts by weight of a 5% by weight aqueous solution of polyvinyl alcohol was added, the mixture was transferred to an autoclave to start heating, and the mixture was reacted at 140°C for 8 hours to obtain divinylbenzene resin particles. The divinylbenzene resin particles were washed with water, classified, and then freeze-dried to obtain a gap material 5. With regard to the obtained gap material 5, the average particle diameter was 125 μm and the CV value of the particle diameter was 11%.

(Gap material 6)

A mixture of 30 parts by weight of both-terminal acrylic silicone oil ("X-22-2445" manufactured by Shin-Etsu Chemical Co., Ltd.) and 3.3 parts by weight of vinyltrimethoxysilane ("KBM-1003" manufactured by Shin-Etsu Chemical Co., Ltd.) was prepared. Obtained was a dispersion C in which 0.5 parts by weight of 1,1,3,3-tetramethylbutylperoxy-2-ethylhexanoate (polymerization initiator, "PEROCTA O" manufactured by NOF Corporation) and 5 parts by weight of silica particles A ("QSG-100" manufactured by Shin-Etsu Chemical Co., Ltd.) were dispersed in this mixture. In 150 parts by weight of ion-exchanged water, 0.8 parts by weight of a 40% by weight aqueous solution of triethanolamine lauryl sulfate (emulsifier) and 80 parts by weight of a 5% by weight aqueous solution of polyvinyl alcohol (polymerization degree: about 2000, saponification degree: 86.5 mol% to 89 mol%, "GOHSENOL GH-20" manufactured by NIHON GOSEI KAKO Co., Ltd.) were mixed to prepare an aqueous solution B. The dispersion C was charged in a separable flask placed in a warm bath, and then the aqueous solution B was added. After that, it was confirmed that the particle diameter became a predetermined value. After that, the temperature was raised to 90°C, and polymerization was conducted for 9 hours. The entire amount of the particles after polymerization was washed with water by centrifugation, classified, and then freeze-dried to obtain silicone particles. With regard to the obtained silicone particles, the particle diameter was 100 μm and the CV value of the particle diameter was 10%.

The silica particles A were prepared as coating particles. A dispersion D in which 0.2 parts by weight of the silica particles A was dispersed in 4.0 parts by weight of methanol was prepared.

In a 500 ml separable flask placed in a warm bath, 7.0 parts by weight of the obtained silicone particles and 88.5 parts by weight of distilled water were charged, and the dispersion D was gently dropped while irradiating the

mixture with ultrasonic waves. After that, the mixture was stirred at room temperature for 6 hours to cover the surface of the silicone particles with the silica particles A. The entire amount of the particles after treatment was washed with water by centrifugation to obtain a gap material 6. With regard to the obtained gap material 6, the average particle diameter was 103 μm and the CV value of the particle diameter was 10%.

(Gap material 7)

The silicone particles obtained in the process of fabricating the gap material 6 were prepared. In a 500 ml separable flask placed in a warm bath, 7.0 parts by weight of the silicone particles, 85 parts by weight of distilled water, 7 parts by weight of methanol, and 0.2 parts by weight of 28% ammonia water were charged, the temperature was raised to 80°C while performing stirring, and a reaction was conducted for 1 hour to promote the hydrolysis of the silanol groups introduced onto the surface, whereby a silica coating layer was formed. The obtained particles were washed with water by centrifugation to obtain a gap material 7. With regard to the obtained gap material 7, the average particle diameter was 102 μm and the CV value of the particle diameter was 10%.

(Gap material 8)

Silicone particles were fabricated in the same manner as the gap material 1 except that both-terminal methacrylic silicone oil ("X-22-164A" manufactured by Shin-Etsu Chemical Co., Ltd.) was used instead of both-terminal acrylic silicone oil ("X-22-2445" manufactured by Shin-Etsu Chemical Co., Ltd.), and a gap material 8 was obtained.

(Gap material 9)

Silicone particles were fabricated in the same manner as the gap material 1 except that both-terminal methacrylic silicone oil ("X-22-164AS" manufactured by Shin-Etsu Chemical Co., Ltd.) was used instead of both-terminal acrylic silicone oil ("X-22-2445" manufactured by Shin-Etsu Chemical Co., Ltd.), and a gap material 9 was obtained.

(Gap material A)

Glass beads (average particle diameter: 120 μm, CV value of particle diameter: 32%, refractive index: 1.58)

(Gap material B)

(Seed particle forming process)

In a 1 L plastic container, 240 g of methyltrimethoxysilane as a raw material and 16 g of ion-exchanged water were charged and stirred at 30°C and about 200 rpm. After 3 hours, a uniform solution (1) was obtained. In a 2 L glass container, 1200 g of water and 12 g of 1 N ammonia water were charged, and the entire amount of the solution (1) was added while performing stirring at 20°C and 80 rpm to prepare a raw material solution (2). Seed particles were grown using the raw material solution (2). The raw material solution (2) became cloudy several tens of seconds after the addition of the solution (1), and nuclei of particles were generated in the liquid. The particle diameter growth of the seed particles stopped 20 minutes after the liquid became cloudy. The growth stop time was set to 20 minutes.

Synthesis was conducted using the raw material solution (2) for 10 minutes to form seed particles, and a seed particle solution (3) was obtained. The particle diameter of the seed particles determined from an optical microscope image was about 10.3 μm.

(Particle growing process)

Particles were obtained by repeating this process five times until to have the target particle diameter.

For the first time, 936 g of water, 192 g of methyltrimethoxysilane, and 24 g of a 1% aqueous solution of ammonium dodecyl sulfate were stirred in a 2 L reaction vessel to prepare a particle growth solution (4). To the particle growth solution (4), 400 g of the seed particle solution (3) was added, and the mixture was stirred at 25°C and 50 rpm. After 12 hours, it was confirmed that the growth of the particles had stopped, and 200 g of a 25% by weight ammonia aqueous solution was added to age the particles. After that, the particles were left to still stand for solid-liquid separation, washed with methanol, and then vacuum dried at 40°C to obtain particles (5).

(Firing process)

The particles (5) were subjected to pre-firing in an air atmosphere at 200°C for 1 hour, and then to main firing in an air atmosphere at 480°C for 10 hours to obtain a gap material B. With regard to the obtained gap material B, the average particle diameter was 122 μm, the CV value of the particle diameter was 5.3%, and the refractive index was 1.52.

(Example 1)

(Preparation of adhesive)

To a silicone adhesive ("LUMISIL 102" manufactured by Wacker Asahi Kasei Silicone Co., Ltd.), the gap material 1 was added so that the content in the obtained adhesive was 2% by weight, and uniformly dispersed by performing stirring using a planetary stirrer, whereby an adhesive was prepared.

(Fabrication of display device)

The obtained adhesive was filled in a syringe, and the adhesive was applied onto an image display element so as to have a thickness of 120 μm using a dispenser to form an adhesive layer, and then a transparent protective material was stacked on the formed adhesive layer to obtain a stacked body. The adhesive layer of the obtained stacked body was cured at 23°C for 1 hour to bond the image display element and the transparent protective material together, whereby a display device was obtained.

(Example 2)

A display device was obtained in the same manner as in Example 1 except that the gap material 2 was used instead of the gap material 1 during the preparation of adhesive.

(Example 3)

A display device was obtained in the same manner as in Example 1 except that the gap material 3 was used instead of the gap material 1 during the preparation of adhesive.

(Example 4)

A display device was obtained in the same manner as in Example 1 except that the gap material 4 was used instead of the gap material 1 during the preparation of adhesive.

(Example 5)

During the preparation of adhesive, UV curable adhesive ("Z-582-31" manufactured by Aica Kogyo Co., Ltd.) was used instead of the silicone adhesive ("LUMISIL 102" manufactured by Wacker Asahi Kasei Silicone Co., Ltd.) and the gap material 5 was used instead of the gap material 1. During the fabrication of display device, the adhesive layer of the stacked body was cured at a wavelength of 350 nm and an irradiance of 1500 mJ/$cm^2$ instead of curing the adhesive layer of the stacked body at 23°C for 1 hour. A display device was obtained in the same manner as in Example 1 except for the changes.

(Example 6)

A display device was obtained in the same manner as in Example 1 except that the gap material 6 was used instead of the gap material 1 during the preparation of adhesive.

(Example 7)

A display device was obtained in the same manner as in Example 1 except that the gap material 7 was used instead of the gap material 1 during the preparation of adhesive.

(Example 8)

A display device was obtained in the same manner as in Example 1 except that the gap material 8 was used instead of the gap material 1 during the preparation of adhesive.

(Example 9)

A display device was obtained in the same manner as in Example 1 except that the gap material 9 was used instead of the gap material 1 during the preparation of adhesive.

(Comparative Example 1)

A display device was obtained in the same manner as in Example 1 except that the gap material A was used instead of the gap material 1 during the preparation of adhesive.

(Comparative Example 2)

A display device was obtained in the same manner as in Example 1 except that the gap material 1 was not used during the preparation of adhesive.

(Comparative Example 3)

A display device was obtained in the same manner as in Example 1 except that the gap material B was used instead of the gap material 1 during the preparation of adhesive.

(Evaluation)

(1) 10% K value of gap material

The 10% K value of the gap material was measured using "Fischer Scope H-100" manufactured by FISCHER INSTRUMENTS K.K. by the method described above.

(2) Average particle diameter of gap material

With regard to the obtained gap material, the particle diameters of about 100000 gap materials were measured using a particle size distribution measuring apparatus ("Multisizer 4" manufactured by Beckman Coulter, Inc.), and the average particle diameter was calculated.

(3) Viscosity of adhesive

The viscosity of the obtained adhesive at 25°C was measured using a single cylindrical rotating viscometer.

(4) Refractive index

In Examples 1 to 9 and Comparative Examples 1 and 3, the refractive index (R1) of the obtained gap material was measured by the method described above.

In Examples 1 to 4 and 6 to 9 and Comparative Example 1 to 3, a silicone adhesive ("LUMISIL 102" manufactured by Wacker Asahi Kasei Silicone Co., Ltd.), which was a curable component of the adhesive, was prepared. With regard to the prepared curable component, the refractive index (R2) of the cured product obtained by curing the curable component at 23°C for 1 hour was measured by the method described above. From the obtained results, the absolute value of the difference between the refractive index (R2) of the cured product obtained by curing the curable component at 23°C for 1 hour and the refractive index (R1) of the gap material was calculated.

A UV curable adhesive ("Z-582-31" manufactured by Aica Kogyo Co., Ltd.), which was a curable component of the adhesive and used in Example 5, was prepared. With regard to the prepared curable component, the refractive index (R3) of the cured product obtained by curing the curable component at a wavelength of 350 nm and an irradiance of 1500 mJ/$cm^2$ was measured by the method described above. From the obtained results, the absolute value of the difference between the refractive index (R3) of the cured product obtained by curing the curable component at a wavelength of 350 nm and an irradiance of 1500 mJ/$cm^2$ and the refractive index (R1) of the gap material was calculated.

(5) Transmittance

In Examples 1 to 4 and 6 to 9 and Comparative Example 1 to 3, with regard to the obtained adhesives, the transmittance (T1) of the cured product obtained by curing the adhesive at 23°C for 1 hour at a wavelength of 650 nm was measured by the method described above. In Examples 1 to 4 and 6 to 9 and Comparative Example 1 to 3, a silicone adhesive ("LUMISIL 102" manufactured by Wacker Asahi Kasei Silicone Co., Ltd.), which was a curable component of the adhesive, was prepared. With regard to the prepared curable component, the transmittance (T2) of the cured product obtained by curing the curable component at 23°C for 1 hour at a wavelength of 650 nm was measured by the method described above. From the obtained transmittance(T1) and transmittance(T2), the ratio (T1/T2) of the transmittance(T1) of the cured product obtained by curing the adhesive at 23°C for 1 hour at a wavelength of 650 nm to the transmittance (T2) of the cured product obtained by curing the curable component at 23°C for 1 hour at a wavelength of 650 nm was calculated.

In Example 5, with regard to the obtained adhesive, the transmittance (T3) of the cured product obtained by curing the adhesive at a wavelength of 350 nm and an irradiance of 1500 mJ/cm$^2$ at a wavelength of 650 nm was measured by the method described above. A UV curable adhesive ("Z-582-31" manufactured by Aica Kogyo Co., Ltd.), which was a curable component of the adhesive, was prepared in Example 5. With regard to the prepared curable component, the transmittance (T4) of the cured product obtained by curing the curable component at a wavelength of 350 nm and an irradiance of 1500 mJ/cm$^2$ at a wavelength of 650 nm was measured by the method described above. From the obtained transmittance(T3) and transmittance(T4), the ratio (T3/T4) of the transmittance (T3) of the cured product obtained by curing the adhesive at a wavelength of 350 nm and an irradiance of 1500 mJ/cm$^2$ at a wavelength of 650 nm to the transmittance (T4) of the cured product obtained by curing the curable component at a wavelength of 350 nm and an irradiance of 1500 mJ/cm$^2$ at a wavelength of 650 nm was calculated.

(6) Gap controllability

With regard to the obtained ten display devices, the thickness of the adhesive layer was measured using a stereomicroscope ("SMZ-10" manufactured by Nikon Corporation), and the average thickness of the adhesive layer in the ten display devices was calculated. The gap controllability was judged according to the following criteria.

[Criteria for judgment in gap controllability]

∞: Average thickness of adhesive layer is 108 μm or more and 132 μm or less
◦: Average thickness of adhesive layer is 96 μm or more and less than 108 μm or more than 132 μm and 150 μm or less.
×: Average thickness of adhesive layer is less than 96 μm or more than 150 μm

(7) Visibility

With regard to the obtained display devices, it was visually evaluated whether or not reflection of outdoor light was generated. The visibility was judged according to the following criteria.

[Criteria for judgment in visibility]

∞: Reflection of outdoor light is rarely generated
◦: Reflection of outdoor light is slightly generated but there is no problem in actual use
×: Reflection of outdoor light is generated so that there are problems in actual use

(8) Appearance of image display element or transparent protective material

With regard to the obtained display devices, it was confirmed whether or not the image display element or the transparent protective material was scratched using a stereomicroscope ("SMZ-10" manufactured by Nikon Corporation). The appearance of the image display element or the transparent protective material was judged according to the following criteria.

[Criteria for judgment in appearance of image display element or transparent protective material]

- ◦◦: Image display element or transparent protective material is not scratched
- ◦: Image display element or transparent protective material is slightly scratched but there is no problem in actual use
- ×: Image display element or transparent protective material is scratched so that there are problems in actual use

(9) Stress relaxation property

Using a liquid tank type thermal shock tester ("TSB-51" manufactured by ESPEC), a hot-cold cycle test was conducted in which the process of holding the obtained display device at -40°C for 5 minutes, raising the temperature to 150°C, holding the display device at 150°C for 5 minutes, and then lowering the temperature to -40°C was one cycle. The display device was taken out after 500 cycles.

The display device was observed under a stereomicroscope ("SMZ-10" manufactured by Nikon Corporation). It was observed whether or not cracking of the adhesive layer had occurred or whether or not peeling off of the adhesive layer had occurred. The stress relaxation property was judged according to the following criteria.

[Criteria for judgment in stress relaxation property]

- ◦◦: Cracking of adhesive layer has not occurred and peeling off of adhesive layer has not occurred
- ◦: Cracking of adhesive layer has slightly occurred or peeling off of adhesive layer has slightly occurred but there is no problem in actual use
- ×: Cracking of adhesive layer has occurred or peeling off of adhesive layer has occurred so that there are problems in actual use

The results are presented in the following Tables 1 and 2.

[Table 1]

| | Kind of gap material | Content of gap material (% by weight) | 10% K value of gap material ($N/mm^2$) | Average particle diameter of gap material (μm) | Viscosity of adhesive (mPa·s) | Refractive index | | | | |
|---|---|---|---|---|---|---|---|---|---|---|
| | | | | | | R1 | R2 | Absolute value of difference between R1 and R2 | R3 | Absolute value of difference between R1 and R3 |
| Example 1 | Gap material 1 | 2 | 100 | 121 | 1000 | 1.43 | 1.41 | 0.02 | - | - |
| Example 2 | Gap material 2 | 2 | 100 | 121 | 1000 | 1.44 | 1.41 | 0.03 | - | - |
| Example 3 | Gap material 3 | 2 | 100 | 121 | 1000 | 1.42 | 1.41 | 0.01 | - | - |
| Example 4 | Gap material 4 | 2 | 1600 | 118 | 1000 | 1.49 | 1.41 | 0.08 | - | - |
| Example 5 | Gap material 5 | 2 | 6000 | 125 | 2300 | 1.57 | - | - | 1.52 | 0.05 |
| Example 6 | Gap material 6 | 2 | 100 | 103 | 1000 | 1.411 | 1.41 | 0.001 | - | - |
| Example 7 | Gap material 7 | 2 | 100 | 102 | 1000 | 1.411 | 1.41 | 0.001 | - | - |
| Example 8 | Gap material 8 | 2 | 260 | 119 | 1000 | 1.428 | 1.41 | 0.018 | - | - |
| Example 9 | Gap material 9 | 2 | 450 | 120 | 1000 | 1.435 | 1.41 | 0.025 | - | - |

(continued)

| | Kind of gap material | Content of gap material (% by weight) | 10% K value of gap material ($N/mm^2$) | Average particle diameter of gap material ($\mu m$) | Viscosity of adhesive (mPa·s) | Refractive index | | | | |
|---|---|---|---|---|---|---|---|---|---|---|
| | | | | | | R1 | R2 | Absolute value of difference between R1 and R2 | R3 | Absolute value of difference between R1 and R3 |
| Comparative Example 1 | Gap material A | 2 | 20000 | 120 | 1000 | 1.58 | 1.41 | 0.17 | - | - |
| Comparative Example 2 | - | - | - | - | 1000 | - | 1.41 | - | - | - |
| Comparative Example 3 | Gap material B | 2 | 12000 | 122 | 1000 | 1.52 | 1.41 | 0.11 | - | - |

[Table 2]

| | Transmittance | | | | | | Gap controllability | Visibility | Appearance of image display element or transparent protective material | Stress relaxation property |
|---|---|---|---|---|---|---|---|---|---|---|
| | T1(%) | T2 (%) | T1/T2 | T3 (%) | T4 (%) | T3/T4 | | | | |
| Example 1 | 94 | 99 | 0.95 | - | - | - | ○○ | ○○ | ○○ | ○○ |
| Example 2 | 92 | 99 | 0.93 | - | - | - | ○○ | ○ | ○○ | ○○ |
| Example 3 | 98 | 99 | 0.99 | - | - | - | ○○ | ○○ | ○○ | ○○ |
| Example 4 | 91 | 99 | 0.92 | - | - | - | ○○ | ○ | ○ | ○ |
| Example 5 | - | - | - | 96 | 99 | 0.97 | ○○ | ○○ | ○ | ○ |
| Example 6 | 94 | 99 | 0.95 | - | - | - | ○○ | ○○ | ○○ | ○○ |
| Example 7 | 94 | 99 | 0.95 | - | - | - | ○○ | ○○ | ○○ | ○○ |
| Example 8 | 95 | 99 | 0.96 | - | - | - | ○○ | ○○ | ○○ | ○ |
| Example 9 | 93 | 99 | 0.94 | - | - | - | ○○ | ○ | ○ | ○ |
| Comparative Example 1 | 74 | 99 | 0.75 | - | - | - | × | × | × | × |
| Comparative Example 2 | 99 *Gap material is not used | 99 | 1 *Gap material is not used | - | - | - | × | × | ○○ | × |
| Comparative Example 3 | 80 | 99 | 0.81 | - | - | - | ○○ | × | × | × |

## EXPLANATION OF SYMBOLS

1: Display device
2: Gap material
3: First member
4: Second member (image display element)
5: Adhesive layer

## Claims

1. An adhesive comprising:

   a curable component; and
   a gap material,
   a 10% K value of the gap material being 10000 $N/mm^2$ or less, and
   an absolute value of a difference between a refractive index of a cured product obtained by curing the curable component at 23°C for 1 hour and a refractive index of the gap material being 0.1 or less.

2. The adhesive according to claim 1, wherein a ratio of a transmittance of a cured product obtained by curing the adhesive at 23°C for 1 hour at a wavelength of 650 nm to a transmittance of a cured product obtained by curing the curable component at 23°C for 1 hour at a wavelength of 650 nm is 0.92 or more.

3. An adhesive comprising a curable component and a gap material,

   a 10% K value of the gap material being 10000 $N/mm^2$ or less, and
   an absolute value of a difference between a refractive index of a cured product obtained by curing the curable component at a wavelength of 350 nm and an irradiance of 1500 $mJ/cm^2$ and a refractive index of the gap material being 0.1 or less.

4. The adhesive according to claim 3, wherein a ratio of a transmittance of a cured product obtained by curing the adhesive at a wavelength of 350 nm and an irradiance of 1500 $mJ/cm^2$ at a wavelength of 650 nm to a transmittance of a cured product obtained by curing the curable component at a wavelength of 350 nm and an irradiance of 1500 $mJ/cm^2$ at a wavelength of 650 nm is 0.92 or more.

5. The adhesive according to any one of claims 1 to 4, wherein the gap material contains a silicone resin.

6. The adhesive according to any one of claims 1 to 5, wherein the curable component contains an acrylic resin or a silicone resin.

7. The adhesive according to claim 6, wherein the curable component contains a silicone resin represented by the following Formula (1):

   [Chemical 1]

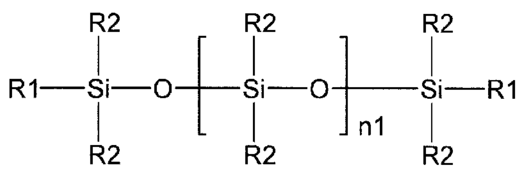

(1)

   in Formula (1), R1 independently represents an alkenyl group having 2 to 6 carbon atoms, R2 independently represents an alkyl group having 1 to 6 carbon atoms or an aryl group having 6 to 20 carbon atoms, and n1 is a number to set a viscosity of an alkenyl group-containing polyorganosiloxane represented by Formula (1) at 23°C to 10 mPa·s to 1000000 mPa·s.

**8.** The adhesive according to any one of claims 1 to 7, wherein the gap material is particles.

**9.** The adhesive according to claim 8, wherein an average particle diameter of the gap materials is 30 μm or more.

**10.** The adhesive according to any one of claims 1 to 9, which is used in an optical bonding application.

**11.** The adhesive according to any one of claims 1 to 10, which has a viscosity of 200 mPa·s or more and 100000 mPa·s or less at 25°C.

**12.** A gap material being used to obtain an optical bonding adhesive and having a 10% K value of 10000 $N/mm^2$ or less.

**13.** The gap material according to claim 12, which has a refractive index of 1.40 or more and 1.60 or less.

**14.** The gap material according to claim 12 or 13, which comprises a silicone resin.

**15.** The gap material according to any one of claims 12 to 14, which is particles and has an average particle diameter of 30 μm or more.

**16.** A display device comprising:

a first member;
an image display element as a second member; and
an adhesive layer bonding the first member and the second member together,
the adhesive layer being a cured product of the adhesive according to any one of claims 1 to 11.

**17.** The display device according to claim 16, wherein the first member is a transparent protective material.

[FIG. 1.]

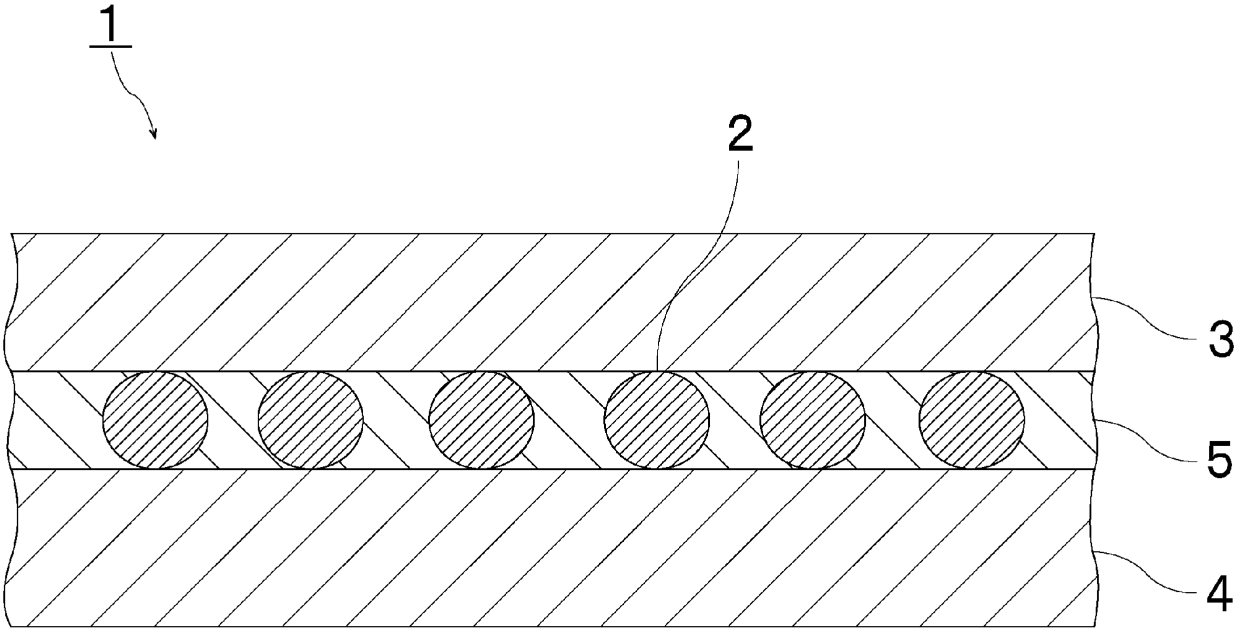

## INTERNATIONAL SEARCH REPORT

International application No.
PCT/JP2020/038874

A. CLASSIFICATION OF SUBJECT MATTER
C09J 9/00(2006.01)i; C09J 11/06(2006.01)i; C09J 11/08(2006.01)i; C09J 133/00(2006.01)i; C09J 183/04(2006.01)i; G02F 1/1333(2006.01)i
FI: C09J9/00; C09J11/08; C09J133/00; C09J183/04; G02F1/1333; C09J11/06

According to International Patent Classification (IPC) or to both national classification and IPC

B. FIELDS SEARCHED

Minimum documentation searched (classification system followed by classification symbols)
C09J9/00; C09J11/06; C09J11/08; C09J133/00; C09J183/04; G02F1/1333

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2010-190936 A (EPSON TOYOCOM CORP.) 02 September 2010 (2010-09-02) claims 1, 3, paragraphs [0012]-[0013], [0018], [0021]-[0022], [0032]-[0038], example 1, fig. 6 | 1-4,6,8,10-13<br>9-11,15-17<br>5,7,14 |
| Y | JP 2012-128421 A (SAMSUNG CORNING PRECISION MATERIALS CO., LTD.) 05 July 2012 (2012-07-05) claims 1, 6, 13, paragraphs [0031]-[0039], [0050]-[0054], fig. 2 | 9-11,15-17 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>17 December 2020 (17.12.2020) | Date of mailing of the international search report<br>28 December 2020 (28.12.2020) |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**
Information on patent family members

International application No.
PCT/JP2020/038874

| Patent Documents referred in the Report | Publication Date | Patent Family | Publication Date |
|---|---|---|---|
| JP 2010-190936 A | 02 Sep. 2010 | (Family: none) | |
| JP 2012-128421 A | 05 Jul. 2012 | US 2012/0146482 A1 claims 1, 6, 13, fig. 2, paragraphs [0044]-[0059], [0065]-[0069] EP 2463705 A1 CN 102540536 A KR 10-2012-0065950 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2017226832 A